(19) **Europäisches Patentamt**
**European Patent Office**
**Office européen des brevets**

(11) **EP 2 012 464 A2**

(12) **EUROPEAN PATENT APPLICATION**

(43) Date of publication:
**07.01.2009 Bulletin 2009/02**

(51) Int Cl.:
***H04L 12/24*** *(2006.01)*

(21) Application number: **08006540.2**

(22) Date of filing: **31.03.2008**

<table>
<tr><td>

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.07.2007 US 947716 P**
**20.12.2007 US 961878**

(71) Applicant: **Qualcomm Incorporated**
**San Diego, CA 92121-1714 (US)**

</td><td>

(72) Inventors:
• **Chen, An Mei**
**San Diego, CA 92127 (US)**
• **Xue, Qi**
**c/o QUALCOMM Inc.**
**San Diego, CA 92121-1714 (US)**

(74) Representative: **Heselberger, Johannes et al**
**Patent- und Rechtsanwälte**
**Bardehle - Pagenberg - Dost**
**Altenburg - Geissler**
**Galileiplatz 1**
**81679 München (DE)**

</td></tr>
</table>

(54) **Methods and apparatus for resource provisioning and planning in a communication network**

(57) Methods and apparatus for resource provisioning and planning in a communication network. In an aspect, a method includes generating resource entities that represent resource requirements of targeted services, wherein the resource entities are modeled from at least one of transport network (TN) dependent information and TN independent information, and determining whether the resource entities can be supported by one or more transport networks. An apparatus includes input logic to receive at least one of TN dependent information and TN independent information, and processing logic to generate resource entities that represent resource requirements of targeted services, wherein the resource entities are modeled from at least one of the TN dependent information and the TN independent information, and to determine whether the resource entities can be supported by one or more transport networks.

~ 100

| Service layer | Multimedia Service | | | |
|---|---|---|---|---|
| Resource layer | Network abstraction | | | |
| Network layer | TN1 | TN2 | TN3 | ... |

**FIG. 1**

## Description

**Claim of Priority under 35 U.S.C. §119**

The present Application for Patent claims priority to Provisional Application No. 60/947,716 entitled "Methods and Apparatus for Resource Planning in a Multimedia Communication Network" filed July 3, 2007, and assigned to the assignee hereof and hereby expressly incorporated by reference herein.

## BACKGROUND

### Field

The present application relates generally to the operation of data networks, and more particularly, to methods and apparatus for resource provisioning and planning in a communication network.

### Background

In an end-to-end multimedia communication system, the multimedia content may be distributed from the content provider to the content consumer (also known as end user) over different types of transport networks (TNs) that comprise wired and/or wireless networks. In one embodiment of such a multimedia system, a set of multimedia components (such as video and audio components) are offered as a whole to the end user and are referred to as a 'Service'. The logical entity in a TN that provides transport to the service component is called a 'Flow'.

Each Service in the system may have associated Quality of Service (QoS) criteria that should be met to provide a desired quality level at a receiving device. Typically, the QoS criteria are described in a service layer agreement between the content provider and the system operator. Configuring such a system to carry Services over different TNs to meet their desired QoS requirements can be very complicated, especially in transport networks where the resource is scarce and over-provisioning is not affordable, as in wireless networks.

Therefore, it would be desirable to have a system that operates to provide resource provisioning and planning in a communication system so as to facilitate the distribution of content with the desired QoS.

## SUMMARY

In one or more aspects, a provisioning system, comprising methods and apparatus, is provided that operates to provide resource provisioning and planning in a communication system.

In an aspect, a method is provided for resource planning in a communication network. The method comprises generating one or more resource entities that represent resource requirements of one or more targeted services, respectively, wherein the resource entities are modeled from at least one of transport network dependent information and transport network independent information, and determining whether the one or more resource entities can be supported by one or more transport networks.

In an aspect, an apparatus is provided for resource planning in a communication network. The apparatus comprises input logic configured to receive at least one of transport network dependent information and transport network independent information, and processing logic configured to generate one or more resource entities that represent resource requirements of one or more targeted services, respectively, wherein the resource entities are modeled from at least one of the transport network dependent information and the transport network independent information; and wherein said processing logic is configured to determine whether the one or more resource entities can be supported by one or more transport networks.

In an aspect, an apparatus for resource planning in a communication network, the apparatus comprises means for generating one or more resource entities that represent resource requirements of one or more targeted services, respectively, wherein the resource entities are modeled from at least one of transport network dependent information and transport network independent information, and means for determining whether the one or more resource entities can be supported by one or more transport networks.

In an aspect, a computer program product is provided for resource planning in a communication network. The computer program product comprises a machine-readable medium embodying a first set of codes for causing a computer to generate one or more resource entities that represent resource requirements of one or more targeted services, respectively, wherein the resource entities are modeled from at least one of transport network dependent information and transport network independent information, and a second set of codes for causing the computer to determine whether the one or more resource entities can be supported by one or more transport networks.

In an aspect, at least one integrated circuit is provided that is configured for planning in a communication network. The at least one integrated circuit comprises a first module for generating one or more resource entities that represent resource requirements of one or more targeted services, respectively, wherein the resource entities are modeled from at least one of transport network dependent information and transport network independent information, and a second module for determining whether the one or more resource entities can be supported by one or more transport networks.

Other aspects will become apparent after review of the hereinafter set forth Brief Description of the Drawings, Description, and the Claims.

**BRIEF DESCRIPTION OF THE DRAWINGS**

The foregoing aspects described herein will become more readily apparent by reference to the following Description when taken in conjunction with the accompanying drawings wherein:

**FIG. 1** shows a diagram that illustrates how information in a communication system is divided into three layers in aspects of a provisioning system;

**FIG. 2** illustrates a workflow diagram for use in aspects of a provisioning system;

**FIG. 3** shows an exemplary FLO protocol stack for use in aspects of a provisioning system;

**FIG. 4** shows an exemplary slot allocation for use in aspects of a provisioning system;

**FIG. 5** shows an exemplary method for resource planning for use in aspects of a provisioning system;

**FIG. 6** shows a diagram that illustrates a Delivery Window and a Schedule Window for use in aspects of a provisioning system;

**FIG. 7** shows an exemplary method for a file delivery resource scheduling algorithm for use in aspects of a provisioning system;

**FIG. 8** shows exemplary NPR logic for use in aspects of a provisioning system; and

**FIG. 9** shows exemplary provisioning logic for use in aspect of a provisioning system.

**DESCRIPTION**

In one or more aspects, a provisioning system is provided that operates to provide resource provisioning and planning in a communication network. In an aspect, the system models a variety of Service content types and uses these models to determine network resources required to provide selected QoS at a receiving device. The system then provides a planning result that indicates whether the desired Service content can be provisioned over a selected TN.

The system is especially well suited for use in wireless network environments, but may be used in any type of network environment, including but not limited to, communication networks, public networks, such as the Internet, private networks, such as virtual private networks (VPN), local area networks, wide area networks, long haul networks, or any other type of data network.

**Introduction**

In aspects of the provisioning system, a 'Resource' entity is defined as a logical entity that describes network resource usage in different TNs that can be offered to an application layer Service. A Resource may include one or multiple Resource Descriptors, where each descriptor describes the network resource usage for an independent media component in the Service. The configuration data in a Resource Descriptor can include two types of information:

1. TN-independent information: This set of data describes the QoS to be offered to the application layer Service component regardless of the underlying TNs that carry the content. Such information may include the desired bandwidth, delay, reliability, etc, for the service component.
2. TN-specific information: A set of configurations that describe the protocol stack characteristics of a Flow in a TN that carries the Service component. This set of data, herein called 'Flow Profile', describes the network-specific information about how the network resource in a TN is used to carry the Service component such that the QoS requirements are met. This information may include the encoding/modulation schemes and delivery schedules offered by each specific TN.

In an aspect of the provisioning system, a Resource Descriptor can include one set of TN-independent QoS requirements and multiple sets of the TN-specific data, one for each TN carrying the service component.

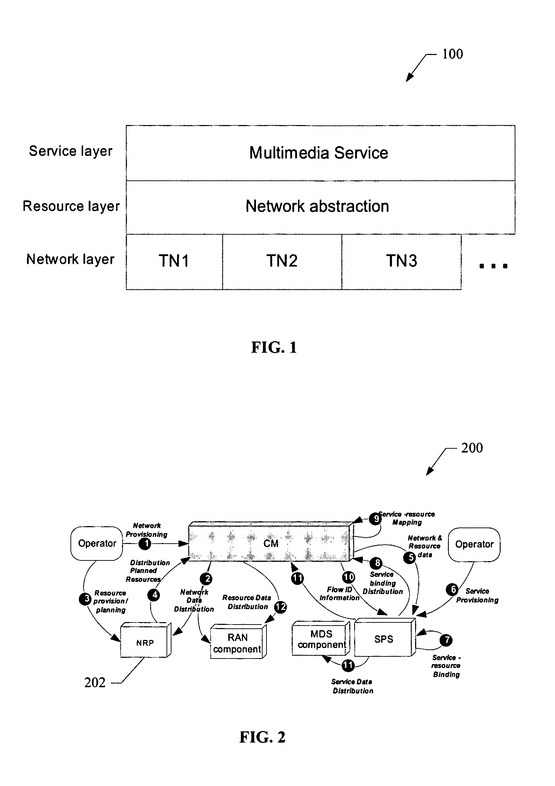

**FIG. 1** shows a diagram **100** that illustrates how information in a communication system is divided into the following three layers in aspects of a provisioning system.

1. Service layer: The service layer describes the application layer characteristics of the media content, e.g., the genre of the content (movie vs. talk show).

2. Network layer: The network layer describes the configuration of the underlying physical transport networks, e.g., network infrastructure hierarchy and network link capacity, etc.

3. Resource layer: The resource layer describes the network resource usage in the TNs that can be offered to the multimedia Services. Thus, the resource layer provides an abstraction between the service layer and the network layer.

In aspects of the provisioning system, the Resource layer provides an abstraction between the service layer and network layer in the communication system. The Resource layer provides the following features:

1. Allows the service layer configuration to be agnostic to the TN-specific data. In other words, it hides the network details from the Service content provider.

2. Allows the network layer configuration to be agnostic to the service-specific data. In other words, it hides the Service details from the network carrier.

As a result, for any Service, the underlying network resource usage in different TNs is decoupled from the application layer content characteristics of the Service. A Service can be added to or removed from any TN without impacting the service layer configurations.

Since the network capacity in a TN is limited, the Resources offered by the system should not exceed the capacity of any TN that provides the Resources. In an aspect, the provisioning system provides a mechanism to plan the Resources in the TNs before offering the Resources to carry Services. During resource planning, the capacity of the TN is verified to ensure that the configured Resources can be accommodated without network resource overbooking. In an aspect, priorities are given to the Resources for resource allocation during planning. In another aspect, different modeling techniques are used for different types of Flows described by the Resource Descriptors. If the planning fails, the provisioning system provides feedbacks to a provisioning operator for adjusting the configuration of the Resources offered in the system such that the updated Resources do not exceed the network capacity.

In another aspect of the provisioning system, a mechanism is provided for generating the delivery schedule for the Resource in the corresponding TNs, such that the QoS requirements of the Services to be carried by the Resource are met.

After successful resource planning, the provisioning system is able to offer the Resources to carry Services. Another aspect provides a mechanism to associate a Service to a Resource. For example, a Service can be associated with any Resource in the system, as long as the Resource can meet the QoS requirement of the Service in the target TNs. On the other hand, a Resource can be offered to carry any Service as long as the resource configuration meets the QoS requirements of the Service. The system is ready to deliver the content of a Service after a Resource is assigned to carry the Service.

Another aspect provides a mechanism by which the Resource configuration, delivery schedules (either in a recurring template or absolute time), and its Service association information are delivered to the transport network components in the system. These Resource parameters are used by the transport network components to serve the Service components and to perform run-time admission control and traffic policing for the corresponding Service content.

In another aspect, the Resource delivery schedule for a Service may be sent to the end user (i.e., receiving device) in advance. As a result, the user will be able to know when and how the Service content is delivered and start receiving the Service accordingly. This may be important in mobile networks where the device has limited power and/or processing capacity.

## Exemplary Aspects

Aspects of the provisioning system are described below within the context of a distribution system that operates to distribute multimedia content efficiently to wireless devices over one or more Radio Access Networks (RANs) as the transport networks. For example, in an aspect, a RAN comprises a Forward Link Only (FLO) network or any other suitable type of network.

The distribution system comprises two segments described as follows.

1. A Media Distribution System (MDS) that manages the media content independent of the underlying RANs, and
2. A RAN that is designed to economically multicast multimedia content to mobile devices.

## Service Types

In aspects of the provisioning system, there are four fundamental types of Services supported; however, the system is not limited to these service types and is operable to support other service types or service sub-types. For example, the following services types are supported.

1. Overhead service type. An Overhead Service includes multiple data components, each at a constant bit rate.
2. Real-time (RT) streaming service type. A RT Service can be one of the following types:

a. Real-time audio/video Service, which includes one Video component at variable bit rate and one Audio component at constant bit rate.
b. Real-time audio slide-show Service, which includes one video component at constant bit rate (for example, one I-frame every 6 seconds) and one audio component at constant bit rate.

3. IP Datacast Service (IPDS) type. An IPDS service includes one data component at constant bit rate
4. Non real-time File Delivery (FD) service type for delivery of files such as media clips. A FD service includes one data component with files of different sizes, which is delivered at an available bit rate in the network.

**The Resource Entity**

The Resource entity is used in the system to provide a RAN abstraction to the MDS segment. For each Service targeted for distribution, a corresponding Resource entity is modeled from TN dependent and independent information to describe the QoS requirements of the targeted Service and the corresponding RAN delivery schedules and configurations.

In an aspect, the Resource entity in the system includes the following parameters:

1. Resource ID - specifies a unique ID for the Resource in the system.
2. Resource type - specifies the type of the Resource. A Resource can be one of the following types: Overhead, RT, IPDS, and FD.
3. Priority - specifies a unique priority of the Resource with regards to other Resources in the system.

Based on the Resource type, one or more Resource Descriptors in the Resource are determined to describe the QoS requirements and RAN usage of the Flow that carries the targeted Service component. The following parameters are specified for each Resource Descriptor in the Resource:

1. Resource descriptor ID - specifies a unique ID that identifies the resource descriptor in the system.
2. Flow type - specifies the type of the corresponding flow that the resource descriptor describes. The flow type for each resource descriptor is determined by the resource type.
3. QoS requirements - specifies the application layer QoS requirements of the corresponding Service component carried by the Flow. Note that some of the QoS requirements may only apply to certain types of Flows and may depend on the application layer Service type. The QoS requirements comprise one or more of the following parameters.

- average data rate - specifies the average data rate for the Service component carried by the Flow.
- traffic class - specifies the traffic class for the Service component carried by the Flow.
- peak data rate - specifies the peak data rate for the Service component carried by the Flow.
- end-to-end latency - specifies the end-to-end latency for the Service component carried by the Flow.
- maximum burst size - specifies the maximum burst size for the Service component carried by the Flow.
- Quality metric - specifies a quality metric, such as Mean Opinion Score (MOS) for video service content.

If the corresponding targeted Service content includes files, the following QoS parameters are specified for each file.

- file size - specifies the maximum size of a file.
- file delivery deadline - specifies the time at which the RAN must finish the deliver of the file.
- file delivery start time - specifies the time at which the RAN can start the deliver of the file.

The following parameters are specified for each transport network that carries the Resource.

1. Network ID - specifies the ID of the network that carries the Resource.
2. Resource state - specifies the state of the Resource in the network (e.g., whether or not the Resource is bound to a Service that is available in the network).

3. Flow profile information - specifies the flow profile that describes the RAN protocol layer characteristics of the corresponding Flow that carries the Service component. The flow profile comprises one or more of the following parameters.

- transmit mode - specifies the transmit mode of the Flow.
- outer code - specifies the outer code of the Flow.
- fragmentation flag - specifies the transport layer fragmentation rules for the Flow.
- checksum flag - specifies whether the transport layer check sum is enabled for the Flow.
- link-layer encryption flag - specifies whether link-layer encryption is enabled for the Flow.
- IP Header Policy - specifies the policy for IP header treatment for the Flow.
- Number of delivery durations - specifies the number of delivery durations in this network for a file. The following parameters are specified for each delivery duration.

    • Delivery window start time - specifies the start time of the delivery duration in the network.
    • Delivery window end time - specifies the end time of the delivery duration in the network.

**Provisioning**

In aspects of the provisioning system, provisioning is divided into three tasks, namely: network level provision, resource level provision, and service level provision.

1. The network provision manages the RAN network infrastructure and hardware configuration.
2. The service provision provides the content provider with the interface for service oriented content configurations.
3. The resource provision facilitates the delivery of the content over the physical networks by linking the network and service together and providing network abstraction to the MDS segment.

A "Provisioning Subsystem" is defined to handle provisioning related functions within the system. The Provisioning Subsystem comprises the following three components.

1. Configuration Manager (CM): The CM component provides the following network related provisioning functions.

- RAN related provisioning, including the configuration of RAN network components
- Provisioning of the flow profile templates. For example, each of them captures protocol stack characteristics for a given type of Flow supported by the RAN.
- Distribution of network provisioning data to other components in the network.
- Distribution of resource provisioning data to RAN components.

2. Network Resource Planner (NRP). The Network Resource Planner determines the allocation of network Resources to the Services offered via the system. The NRP interfaces with the CM to retrieve network related provisioning data required for Resource provisioning. The NRP provides the following Resource provisioning related functions.

- Provisioning network Resources in the RAN.
- Resource planning to determine if Resources can be accommodated in the system.
- Resource planning to generate delivery schedule for Resources.
- Distribution of Resource data to CM for persistent storage and distribution to RAN components.

3. Service Provisioning Server (SPS). The Service Provisioning Server is responsible for providing provisioning functions related to system services and the marketplace. The SPS interfaces with the CM to retrieve network and resource related provisioning data required for Service provisioning. The SPS provides the following service provisioning related functions.

- Provisioning of Services that define the content that is distributed over the system.
- Distribution of service provisioning data to components within the MDS.
- Distribution of a trigger to the CM for Resource to Service association

## Provisioning Workflow

FIG. 2 illustrates a workflow diagram 200 for use in aspects of a provisioning system. The workflow diagram 200 illustrates the operation of aspects of the provisioning system to provide network provisioning, network resource provisioning, and service provisioning. In an aspect, network resource planning (NRP) logic 202 operates to provide Resource provisioning as described herein.

Operations associated with the workflow diagram 200 are described as follows. It should be noted that the operations described below may be performed in any suitable order. It should also be noted that although two operator blocks are shown in FIG. 2, the operator functions may be performed by one or more persons.

1. An operator provisions the RAN components that will be available in the system.

2. Network configuration information is distributed to RAN components. This network configuration information is also made available to the NRP for the configuration and planning of network Resources.

3. The operator provisions and plans network Resources at the NRP logic 202.

4. Once the network Resources are successfully planned, all planned Resources are made available to the CM, which maintains the current set of planned network Resources.

5. The CM makes network infrastructure configuration and planned network Resources available to the SPS for service provisioning.

6. The operator provisions Services at the SPS.

7. The operator binds configured Services to planned network Resources.

8. The SPS sends information of Resource to Service bindings to the CM.

9. The CM performs the binding of the Resource and Service by generating the network logical component identifiers (e.g. flow IDs) for the transport of the service content.

10. The CM sends the Flow IDs for the Service to the SPS for inclusion into service definition System Information, which will be made available to an end user.

11. The SPS distributes the Service configuration to the MDS components, which will make the scheduling information of the Service available to the end user.

12. The CM distributes the Resource configuration and Resource to Service mapping to the RAN components. The RAN components will use the Resource configuration information to performance run-time flow admission control and traffic policing.

After a Service and its corresponding Resource are successfully provisioned in the system, any update to the service layer configuration can be made at the SPS without impacting the underlying Resource configuration.

On the other hand, if there is any change to the RAN configuration or QoS requirement of the Service carried by the Resource, the NRP will re-plan the Resources in the network and update the Resources transparent to the service layer configuration.

## Resource Scheduling Procedure

In aspects of the provisioning system, a network resource scheduling procedure is performed by the NRP logic 202 by processing a set of candidate Resources as input and outputting a set of schedulable Resources that can be accommodated together in the system. For example, the candidate resources are resource entities associated with targeted services that have been modeled from TN dependent and independent information.

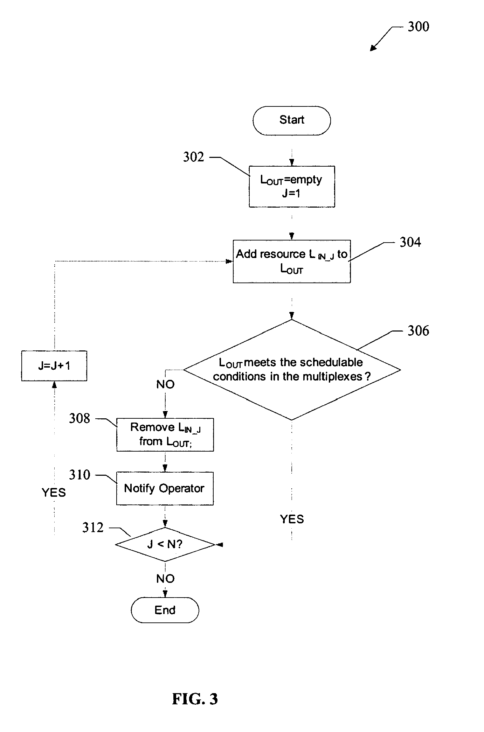

FIG. 3 shows an exemplary method 300 for resource scheduling for use in aspects of a provisioning system. For example, the method 300 is performed by the NRP logic 202. For clarity, it is assumed that a list of candidate Resources (i.e., resource entities) are provided as input to the method 300. The list of candidate Resources are generated based on targeted Services to be transported in the network. The list of candidate Resources is sorted in priority from high to low. For example, a candidate Resources associated with a targeted real time Service is given a higher priority than a candidate Resource associated with a targeted IP data cast service. It should be noted that the targeted Services and their associated candidate Resources may be assigned any desired priority to determine the order in which the candidate Resources are sorted. It should also be noted that the method 300 is suitable for use with any set of candidate Resources derived from any suitable service types not limited to the service types described herein. A description of the method 300 is provided below and the following definitions apply.

$L_{IN}$: list of candidate Resources provided as input and sorted by their assigned priorities from high to low.

$L_{IN\_J}$: candidate Resource J in list $L_{IN}$.

$L_{OUT}$: list of schedulable Resources.

N: total number of candidate Resources in $L_{IN}$.

At block 302, the method starts with an empty list of schedulable Resources ($L_{OUT}$) and index J set to "1."

At block **304**, the list of candidate Resources (L$_{IN}$) are processed one by one based on their priorities from high to low. For example, a candidate Resource on top of the input Resources list (L$_{IN}$) is added to the schedulable list (L$_{OUT}$).

At block **306,** a determination is made as to whether the Resources in the updated L$_{OUT}$ list can be scheduled together for every network that carries the candidate Resource. If a candidate Resource can not be scheduled, the method proceeds to block 308 where the candidate Resource is removed from the schedulable list (L$_{OUT}$). At block **310**, the NRP logic **202** notifies the operator regarding candidate Resources that are not schedulable and provides the reasons for the failures. The method 300 continues at block **312** until all candidate Resources in the list (L$_{IN}$) have been tested for inclusion in the schedulable list (L$_{OUT}$). At the conclusion of the method **300,** L$_{OUT}$ comprises a list of schedulable Resources.

In an aspect, the method **300** is performed for candidate resources derived from targeted RT services, IPDS services, and FD services. However, the method **300** is suitable for use with other candidate resources derived from other types of services. In addition, the criteria used for successful scheduling of L$_{OUT}$ at block **306** may be different for different resource types. A description of the algorithms used for each resource type is provided in the following sections. Thus, the method **300** operates to determine the schedulable list of resources L$_{OUT}$.

**Summary of Resource Scheduling Procedure**

In aspects of the provisioning system, a scheduling procedure is performed to determine whether the Resources in the L$_{OUT}$ list can be scheduled together for each network. The following summarizes the operations provided in aspects of the provisioning system.

1. Overhead Resource Scheduling
2. Real Time Resource Scheduling
3. IPDS Resource Scheduling
4. Determining if bandwidth exists for the Overhead, RT, and IPDS Resources.
5. Determining if there is any left-over bandwidth for File Delivery Resources.
6. File Delivery Resource scheduling using any left-over bandwidth

**Notations**

The following notations are defined to facilitate understanding of a Resource planning algorithm for use in aspects of a provisioning system.

$B_j$: the application layer data rate for MLC j.

$B_Y^i$ : the total application layer data rate of resource type Y in network *i*, where Y can be Overhead (O), RT, IPDS, and FD

$D_j$: the physical layer data rate for MLC j,

$D_Y^i$ : the total physical layer data rate of resource type Y in network *i*,

$sp_j$: the number of slots per PLP for MLC j.

$Slot_Y^i$ : the total number of data slots per super-frame used by resource type Y in network i.

$S_Y^i$ : the physical layer OFDM data symbols per frame used by resource type Y in network i.

$e_Y$: the efficiency of slot allocation for resource type Y, which equals the ratio between the number of data slots per frame for resource type Y and the number of slots in $S_Y^i$ .

RAN Overview

To facilitate understanding of the resource planning algorithm used in aspects of the provisioning system, descriptions of a FLO protocol stack that is common to all the Resources, and a slot allocation algorithm are provided below.

FLO Protocol Stack

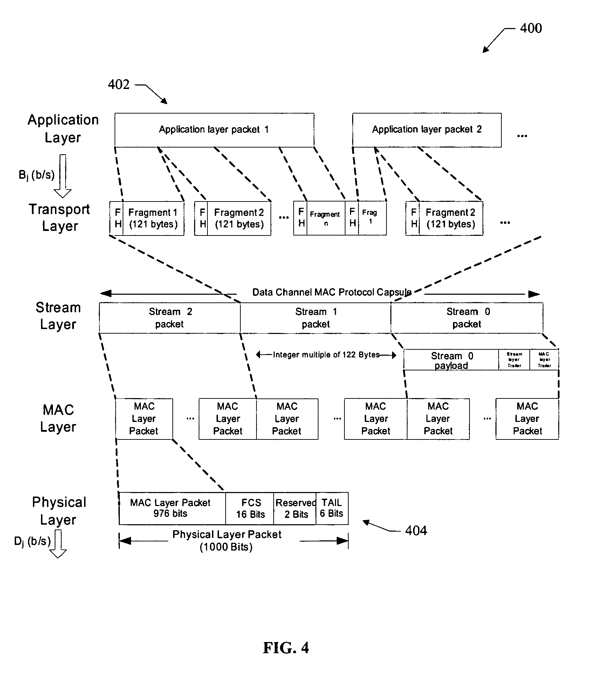

**FIG. 4** shows an exemplary FLO protocol stack **400** for use in aspects of a provisioning system. The resource definitions describe the QoS requirement (e.g., data rate) at the application layer for each service component. In the FLO RAN, each service component is carried in an individual flow. One or more flows are carried by a Media Logical Channel (MLC) in the FLO RAN. While being transmitted over the FLO air interface, the following FLO protocol stack overhead is added to the flow.

Transport layer

Referring again to **FIG. 4,** application layer **402** data traffic $B_j$ belonging to a flow is broken into multiple 121 bytes (968 bits) fragments at the transport layer. A one-byte Framing Header (FH) is added to each fragment to form a 122 byte stream layer block. If necessary, padding is added to the last block to make each block exactly 122 bytes.

Stream layer

Referring again to **FIG. 4**, a stream layer carries each flow in a stream and multiplexes up to three flows into one MLC. The flows multiplexed in an MLC carry the components of the same service. The stream 0 packet contains the stream layer trailer and an empty field that accommodates MAC capsule trailer. The size of stream 0 data is assumed to be only one MAC packet.

Medium Access Control (MAC) layer

The content of an MLC in a transmission frame is encapsulated in an entity referred to as MAC Protocol capsule. MAC Protocol capsule is carried in MAC layer packets.

1. The MAC capsule trailer is added to the stream 0 packet in the base component of the steam. If the stream layer packets have an enhanced component, the MAC layer will add a dummy enhanced packet for stream 0. As shown in equation (1) below, *l* equals 1 for non-layered transmit mode and equals 2 for layered transmit mode.
2. The Reed-Soloman (RS) [16, k, 16-k] encoding is applied to the packets to generate error control blocks, with 16 MAC code packets per code block. Padding packets may be added to MAC data packets such that the total number of MAC data packets is integer multiples of k.

Physical layer

Referring again to **FIG. 4,** physical layer **404** adds a 24 bit header to each MAC layer packet and forms a Physical Layer Packet (PLP) of 1000 bits.
Assuming the input data rate of a MLC j to the FLO transport layer is $B_j$ bits per second, according to **FIG. 4**, the corresponding physical layer data rate (in bits per second) can be determined from the following.

$$D_j(B_j, l, k) = \left\lceil \left( \left\lceil B_j / 968 \right\rceil + l \right) / k \right\rceil * 16 * 1000 \qquad (1)$$

Slot Allocation Overview

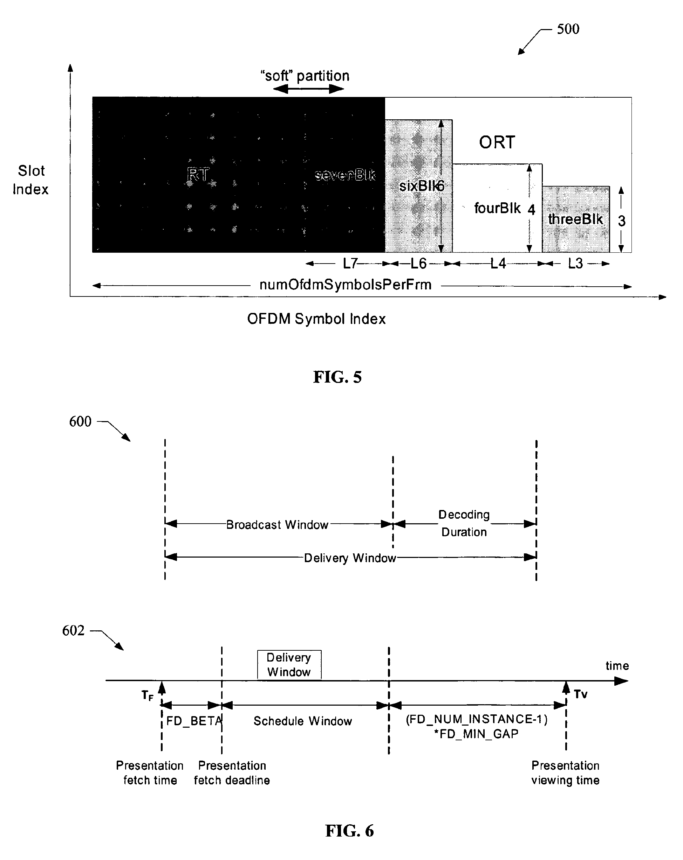

FIG. 5 shows an exemplary slot allocation **500** for use in aspects of a provisioning system. The physical layer packets (PLP) in the FLO RAN are carried in data slots and OFDM data symbols. The OFDM data symbols in a FLO super-frame are divided into four equal portions called frames. The capacity of a network is given as the total number of data symbols per frame. The PLPs of a MLC are scheduled in unit of RS blocks per super-frame and the PLPs in each RS block are distributed evenly in the four frames.
The sub-carriers of each OFDM symbol are divided into seven slots. The FLO RAN offers a diverse set of transmit modes for data delivery. To meet the quality of service requirements for different types of media content, different MLCs are delivered over the FLO RAN using different transmit modes. The number of data slots needed to carry one PLP may be different for the different transmit modes. Therefore, for a 6MHz frequency band, the maximum physical layer raw data rate per super-frame varies from 1.68Mb/s to 11.2Mb/s for different transmit modes. The total number of data slots per super-frame for type Y resources in network i can be given as a function of the physical layer data rate per MLC $D_j$ (bits per second) and expressed as follows;

$$Slot_Y^i = \sum_{j=1}^{n}[sp_j * D_j /(1000 * l_j)] \qquad (2)$$

where 1000 is the number of bits in a PLP, $l_j$ equals 1 for non-layered transmit mode and equals 2 for layered transmit mode, $sp_j$ represents the number of slots per PLP for MLC $j$ (for layered transmit mode $sp_j$ represents the number of slots per base layer PLP and enhancement layer PLP for MLC $i$), and n represents total number of MLCs for resource type Y in network $i$.

The number of slots per PLP as a function of the transmit mode is shown in **Table 1** below.

**Table 1**

| Transmit Mode | Slots per Physical Layer Packet |
|---|---|
| 0 | 3 |
| 1 | 2 |
| 2 | 3/2 |
| 3 | 1 |
| 4 | 3/4 |
| 5 | 5 |
| 6 | 3 |
| 7 | 2 |
| 8 | 3/2 |
| 9 | 3 |
| 10 | 2 |
| 11 | 3/2 |

In an aspect, MLCs that belong to different resource types are scheduled in non-overlapping symbols. Such an example is illustrated in **FIG. 5** where FD resources, IPDS resources and Overhead resource are collectively called "Other than Real Time" (ORT) resources. Based on the slot allocation rule illustrated by **FIG. 5**, the number of data symbols per frame for type Y resources in network $i$ can be given as a function of the total number of slots per super-frame $Slot_Y^i$ and expressed as;

$$S_Y^i = \left\lceil Slot_Y^i /4/7/e_Y \right\rceil \qquad (3)$$

where 4 is the number of frames per super-frame, 7 is the number of slots per OFDM symbol, and $e_Y$ is the slot allocation efficiency of resource type Y.

A turbo decoder at a receiving device limits the number of turbo packets that can be decoded in a single OFDM symbol. This imposes a constraint on the maximum slot height an MLC allocation of a given transmit mode can take.

The ORT resources are arranged in the frame based on their maximum slot height such that no two ORT resources have turbo packet conflicts. It is assumed that the slot height used for all MLCs in a resource type is the same. The slot allocation efficiency is provided to the NRP logic 202 as a FLO network specific data.

**Overhead Resource Scheduling**

In an aspect, the flows in an Overhead resource are sent at constant data rate to the transport layer. A summary for an Overhead Resource scheduling algorithm is as follows.

Input:        Overhead resource to be scheduled.
Output:       The physical data rate ($D^i_o$) required by the Overhead resource, and the number of OFDM data symbols per frame ($S^i_o$) required by the Overhead resource.
Algorithm:    Calculate the total physical layer data rate ($D^i_o$) for the Overhead resource based on the application layer data rate and protocol overhead according to equation (1).
              Calculate the number of OFDM symbols ($S^i_o$) required by the Overhead resource based on the total physical layer data rate and transmit mode according to equations (2) and (3).

**Real Time Resource Scheduling**

The RT resources can be divided into RT Audio/Slide resources and RT Audio/Video resources based on their sub-types. A RT Audio/Slide resource comprises an audio flow and a slide flow that are carried by different MLCs. A RT Audio/Video resource comprises an audio flow and a video flow that are carried by different MLCs.

For both the audio flow and the slide flow, the required application layer data rate ($B_i$) is a constant value representing the average data rate of the flow as described in the resource configuration.

Due to data rate variation introduced by video encoding, $B_i$ is a random variable for a video flow. Based on their data rate characteristics, the video flows are classified into different traffic classes. For each traffic class j, the following QoS requirements apply.

1. Average data rate ($\mu_j$) for a "typical" flow within the traffic class.
2. Standard data rate deviation ($\sigma_j$) for a "typical" flow within the traffic class.

Assuming the instantaneous data rate for each RT video flow $i$ is independently distributed with mean $\mu_i$ and standard deviation $\sigma_i$ as specified by its traffic class, according to the Central Limit Theorem, the instantaneous total data rate of all the RT video flows ($B_v$) follows normal distribution with mean $\mu = \sum_j n_j \mu_j$ and standard deviation $\sigma = \sqrt{\sum_j n_j \sigma_j^2}$, where $n_j$ represents the number of video flows within traffic class j. Therefore, the probability for $B_v$ to be below a certain value ($B_{v\_max}$) can be given as:

$$P[B_V < B_{V\_\max}] = \Phi((B_{V\_\max} - \mu)/\sigma) \qquad (4)$$

where $\Phi(z)$ is the distribution function for standard normal distribution.

If the instantaneous traffic demand $B_v$ exceeds the capacity of the network, a re-encode scheme is employed to reduce the data rate of the video flows such that the total traffic can fit into the super-frame. However, frequent re-encode may degrade the video quality and lead to a bad user experience. Therefore, RT resource planning is done at the NRP logic **202** based on a target maximum re-encode probability per super-frame, as specified by a REENCODE_ PROB parameter.

Given the target upper bound such that the instantaneous video data rate $B_v$ will not exceed $B_{v\_max}$ with probability higher than REENCODE_PROB in a super-frame, the following relationship applies.

$$1 - \Phi((B_{V\_\max} - \mu)/\sigma) = \text{REENCODE\_PROB} \qquad (5)$$

For any target probability REENCODE_PROB, $B_{v\_max}$ can be calculated by the inverse of the normal distribution function. Some commonly used values are given in **Table 2** below.

**Table 2**

| $\Phi(z)$ | 0.999 | 0.995 | 0.990 | 0.975 | 0.950 | 0.900 |
|---|---|---|---|---|---|---|
| z | 3.090 | 2.576 | 2.326 | 1.960 | 1.645 | 1.282 |

Assuming all video flows have the same transmit mode, according to the RT protocol overhead and equation (2), the number of data slots per super-frame required by the RT resources in network i can be expressed as:

$$Slot_{RT}^i = sp_V * B_{V\_max} / (1 - \text{VIDEO\_FDS\_OVHD}) / (1000 * l_V)$$
$$+ \sum_{j=1}^{y} [sp_{S\_j} * D_{S\_j} / (1000 * l_{S\_j})] + \sum_{j=1}^{x+y} [sp_{A\_j} * D_{A\_j} / (1000 * l_{A\_j})] \quad (6)$$

where x is the number of RT A/V resources, y is the number of RT A/S resources in network $i$, $D_{A\_j}$ and $D_{S\_j}$ can be calculated for each flow $j$ according to equation (1), $l_V$ can be calculated base on the transmit mode of video flows, $l_{A\_j}$ and $l_{S\_j}$ can be calculated base on the transmit mode of each audio or slide MLC, VIDEO_FDS_OVHD is the protocol stack overhead for video flows calculated according to video transmit mode and equation (1).

Applying $Slot_{RT}^i$ to equation (3), the number of data symbols per frame required by the RT resources in network $i$ ($S_{RT}^i$) can be calculated.

A summary for the RT resource scheduling in network $i$ is provided below.

Input:

1. RT resources to be scheduled.

Output:

1. The maximum number of data symbols per frame required by the RT resources ($S_{RT}^i$)

Algorithm:

1. Calculate the total physical layer data rate for slide flows based on application layer data rate and protocol overhead according to equation (1).
2. Calculate the total physical layer data rate for audio flows based on application layer data rate and protocol overhead according to equation (1).
3. Calculate the upper bound $B_{V\_max}$ for the RT video flows such that the total RT video data rate will not exceed the bound in a super-frame with probability higher than RT_REENCODE_PROB.
4. Calculate the total physical layer data rate for video flows based on $B_{V\_max}$ and protocol overhead according to equation (1).

5. Calculate the maximum number of OFDM symbols required by RT resources $S_{RT}^i$ based on total physical layer RT traffic (audio, slide and video), transmit mode and RT packing efficiency according to equations (2) and (3).

**IPDS Resource Scheduling**

The IPDS resource uses the UDP/IP protocol to carry the application layer content on top of the FLO transport layer. Each IPDS resource includes an IPDS flow whose average data rate input to the FLO transport layer ($B_j$) is given in the resource configuration.

According to equation (2), the data slots per super-frame required by the IPDS resources ($Slot_{IPDC}^i$) can be

expressed as:

$$Slot^i_{IPDS} = \sum_{j=1}^{n} [sp_{IPDS\_j} * D_{IPDS\_j} / (1000 * l_{IPDS\_j})] \qquad (7)$$

where n is the total number of IPDS resources in network $i$, $D_{IPDS\_j}$ can be calculated for each flow $j$ according to equation (1) and $B_j$, and $l_{IPDS\_j}$ can be calculated based on the transmit mode of the IPDS flows.

Applying $Slot^i_{IPDS}$ to equation (3), the number of data symbols per frame required by the RT resources in network $i$ ( $S^i_{IPDS}$ ) can be calculated.

A summary for the IPDS resource scheduling in network $i$ is provided below.

Input:

1. IPDS resources to be scheduled.

Output:

1. the number of data symbols per frame required by IPDS resources ( $S^i_{IPDS}$ ).

Algorithm:

1. Calculate the total number of data slots per second for IPDS resources based on transport layer input data rate and protocol overhead according to equation (1) and equation (7).

2. Calculate the number of OFDM symbols required by IPDS resources ( $S^i_{IPDS}$ ) based on total number of data slots per second, according to equation (3).

**Capacity Determination**

In an aspect, the system operates to determine if TN capacity is available for all Overhead, RT and IPDS Resources in $L_{OUT}$. To ensure that there is enough capacity in network i to offer all the Overhead, RT and IPDS Resources, the following condition must be met.

$$S^i_{IPDC} + S^i_{RT} + S^i_{O} \leq S^i_{avail} \qquad (8)$$

where $S^i_{avail}$ is the available data symbols per frame in network i. Otherwise, the schedule condition in block **306** fails and the scheduled output list $L_{out}$ comprises less than the candidate resources that are in the input list.

**File Delivery Resource Scheduling**

In various aspects, the FD resource planning occurs in accordance with **FIG. 3** and is described below.

Application Layer Overhead

There are two types of interruptions that prevent a device from successfully receiving the FD presentation content over the RAN:

> 1. Short-term wireless channel erasure that leads to packet corruptions and decoding failures at the device.
> 2. Long-term internal interruption at the device that disables the client from receiving the presentation content, e.g., CPU interruption introduced by concurrent RT channel reception or other applications.

To overcome short-term packet losses due to the wireless channel erasures, a message coding scheme is applied to the presentation content. An FD presentation is broken into k data packets of equal size to generate n code packets with the same size. The code packets are broadcasted over the RAN to the clients. A client is able to decode the presentation if at least (1+Epsilon)*k code packets are successfully received by the device.

To overcome long-term packet reception interruption due to concurrency issues on the device (e.g., user is viewing a RT channel), each presentation is delivered repetitively FD_NUM_INSTANCE times. Each presentation repetition instance is encoded and delivered independently and the minimum gap between the delivery start times of any two instances for the same presentation is FD_MIN_GAP.

Terminology for FD resources

The following concepts are introduced to facilitate an understanding of the FD resource planning.

Delivery Window

Delivery Window (DW) is the scheduled duration in which a presentation instance is delivered to the device. For each presentation instance, due to the use of message coding scheme, the content delivery can be divided into two steps from the device perspective: content collection and content decoding.

**FIG. 6** shows a diagram **600** that illustrates a Delivery Window (DW) for use in aspects of a provisioning system that comprises the following components.

> 1. Broadcast Window (BW): the duration where the code packets of the presentation instance are broadcasted over the air.
> 2. Decoding Duration (DD): the duration, after the broadcast window end time, for the device to successful decoding of the presentation instance.

Schedule Window

**FIG. 6** shows a diagram **602** that illustrates a Schedule Window for the first instance of a presentation for use in aspects of a provisioning system. The Schedule Window (SW) specifies the interval during which a presentation instance is available for delivery. For any presentation instance, the Delivery Window must be a subset of the Schedule Window. The Schedule Window for a presentation instance is calculated as follows.

> 1. The Schedule Window start time for the first instance of presentation j is given by $T_{F\_j}$ + FD_BETA where $T_{F\_j}$ is the fetch time for presentation j, and FD_BETA is the duration between the presentation fetch time and fetch deadline. For time earlier than $T_{F\_j}$ +FD_BETA the presentation instance can not be sent since the presentation content is not available in the system.
> 2. The Schedule Window start time for the (k+1) instance of presentation j is given by the Delivery Window start time of the $k^{th}$ instance of presentation j plus FD_MIN_GAP. For time earlier than that, the presentation instance can not be sent without violating the FD_MIN_GAP constraint. Therefore, unless the $k^{th}$ instance of presentation j is scheduled, the (k+1) instance of the presentation does not have a Schedule Window start time and therefore can not be scheduled for delivery yet.
> 3. The Schedule Window end time for the $k^{th}$ instance of presentation j is given by $T_{V\_j}$-(FD_NUM_INSTANCE-k) *FD_MIN_GAP where $T_{V\_j}$ is the viewing time of presentation j. For time later than that, the presentation instance can not be sent. Otherwise the last instance of the presentation can not be delivered to the device before the presentation viewing time without violating the FD_MIN_GAP constraint.

FD Bandwidth Calculation

Since FD Resources are intended for carrying delay tolerate non-real-time content. The FD Resources are scheduled in a network with the leftover capacity of the schedulable Overhead Resource, RT resources and IPDS Resources. Therefore, the average available OFDM symbols per frame for FD resources can be given as:

$$S_{FD}^i = S_{avail}^i - S_O^i - S_{IPDS}^i - S_{RT}^i \qquad (9)$$

Given $S_{FD}^i$, according to the reverse of equations (3) and (2), the available FD throughput at the FLO transport layer $B_{FD}^i$ can be calculated as:

$$B_{FD}^i = S_{FD}^i * 4 * 7 * e_{FD} * (1000 * l_{FD} / sp_{FD}) * (1 - \text{FD\_FDS\_OVHD}) \quad (10)$$

where $l_{FD}$ can be calculated based on the transmit mode of the FD resources and FD_FDS_OVHD is the FLO protocol stack overhead for FD resources. Note that it is assumed the transmit modes of all the FD resources are the same.
Due to the hardware constraints, the average file writing speed for the device can not exceed MAX_FD_AVE_RATE. On the other hand, trickling the FD resources at a very low data rate will increase the power consumption on the device. Therefore, if $B_{FD}^i$ is less than MIN_FD_AVE_RATE, no FD resource may be scheduled in network i. The summary for the FD resource scheduling in network i is provided below.

Input:

   1. Available OFDM data symbols per frame ($S_{avail}^i$)

   2. OFDM data symbols per frame required by Overhead resource ($S_O^i$)

   3. OFDM data symbols per frame required by IPDS resources ($S_{IPDS}^i$)

   4. OFDM data symbols per frame required by RT resources ($S_{RT}^i$)

Output:

   1. The FLO transport layer bandwidth for FD resources ($B_{FD}^i$)

Algorithm:

   1. Calculate the leftover number of symbols available to FD resources as:

$$S_{FD}^i = S_{avail}^i - S_O^i - S_{IPDS}^i - S_{RT}^i$$

2. Calculate the leftover bandwidth $B_{FD}^{i}$ available to FD resources based on $S_{FD}^{i}$, protocol overhead, and transmit mode according to equation (10).

If $B_{FD}^{i} > \mathrm{MAX\_FD\_AVE\_RATE}$

$$B_{FD}^{i} = \mathrm{MAX\_FD\_AVE\_RATE}.$$

If $B_{FD}^{i} < \mathrm{MIN\_FD\_AVE\_RATE}$

Scheduling fails.

**FD Presentation Scheduling Algorithm**

The FD planning algorithm provided by the NRP logic **202** outputs the list of FD resources that can be scheduled in the system. For each presentation in a schedulable FD resource, the NRP logic **202** generates one Delivery Window per presentation instance in each network that carries the FD resource with the following constraints:

1. Keep each Delivery Window contiguous. The system may not allow multiple Delivery Windows for one presentation instance.
2. The Delivery Windows may not overlap with each other. The server may deliver one presentation instance at a time for the following reasons:

- First, the overall file writing speed at the device decreases as the number of simultaneous file writing processes increases.
- Second, receiving multiple presentations simultaneously introduces higher CPU and memory requirement on the device.
- Third, it is more power efficient for the device to receive each presentation at a high data rate.
- Fourth, the client may not support presentation collection and decoding at the same time.

As a result, the FD presentation scheduling problem becomes the problem of non-preemptive scheduling for N presentations, with FD_NUM_INSTANCE interdependent instances for each presentation. As known by those with skill in the art, non-preemptive scheduling for dependent tasks is a NP-hard problem.

As shown above, for any presentation, the Schedule Window for the (k+1) instance may only be calculated after the $k^{th}$ instance is scheduled. In other words, each presentation may have only one instance eligible for scheduling at any time. Therefore, the task of planning N presentations with FD_NUM_INSTANCE instances per presentation can be reduced to the recursive sub-tasks of scheduling the currently eligible instance from each of the N presentations, where instances of different presentations are independent. For each sub-task, the NRP logic **202** schedules the presentation instances based on a non-preemptive earliest deadline first heuristic.

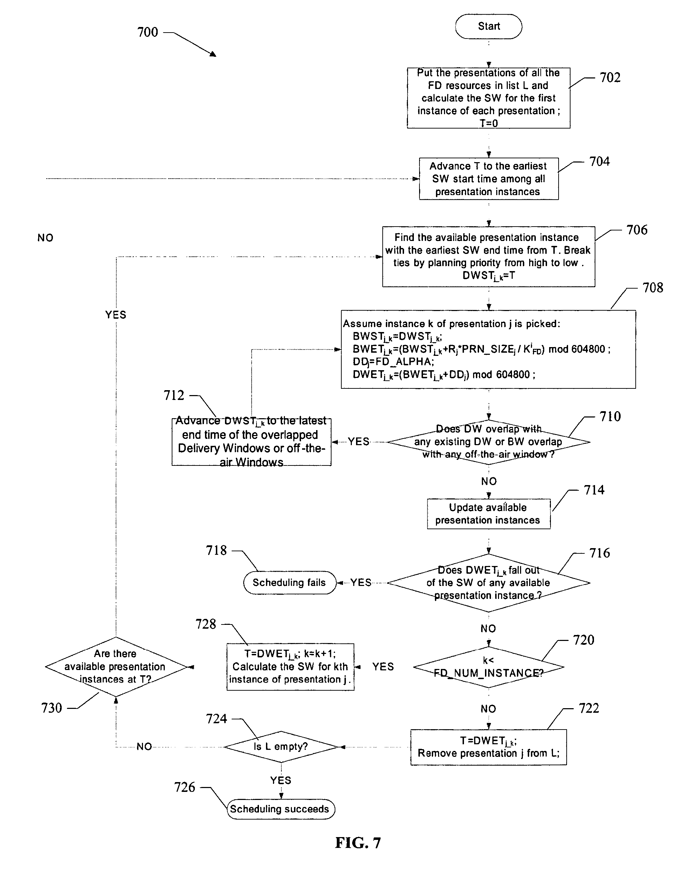

**FIG. 7** shows an exemplary method **700** for an FD resource planning algorithm for use in aspects of a provisioning system. For clarity and understanding of the method 700, the following definitions are provided.

L: list of presentations to be scheduled {P1, ..., Pn}
k: current instance for presentation j
BWSTj_k: BW start time for the $k^{th}$ instance of presentation j
BWETj_k: BW end time for the $k^{th}$ instance of presentation j
DWSTj_k: DW start time for the $k^{th}$ instance of presentation j
DWETj_k: DW end time for the $k^{th}$ instance of presentation j
PRN_SIZEj: size of the presentation j
Rj: Message coding rate (n/k) for the presentation j
Epsilonj: epsilon parameter for presentation j
DDj: Decoding Duration for presentation j
T: schedule time

The NRP logic **202** maintains a "schedule time" that indicates the time when the Delivery Window of a presentation instance can be scheduled. Based on the Schedule Window of each eligible presentation instance, NRP decides which presentation instances are "available" for schedule at the current schedule time. As shown in **FIG. 7,** the NRP logic **202** schedules the available presentation instances of the FD resources based on a non-preemptive earliest Schedule Window end time first heuristic as described below.

At block **702,** the NRP logic **202** puts the presentations of all the FD resources in a list L and calculates the Schedule Window for the first instance of each presentation. Initially, NRP logic **202** sets schedule time to 0.

At block **704,** the NRP logic **202** advances the schedule time to the earliest Schedule Window start time in the presentation list L. A presentation instance becomes "available" if its Schedule Window start time equals to the new schedule time.

At block **706,** the NRP logic **202** finds the available presentation instance (say the $k^{th}$ instance of presentation j) that has the earliest Schedule Window end time from the schedule time. Ties between the available presentation instances are broken according to the planning priority of the resource from high to low. The NRP logic **202** sets the Delivery Window start time of the $k^{th}$ instance of presentation j to the schedule time.

At block **708,** the NRP logic **202** calculates the Delivery Window end time for the $k^{th}$ instance of presentation j. The Contact Window start time, Contact Window end time, and Contact Duration are calculated for the presentation instance.

At block **710,** a determination is made as to whether the calculated Delivery Window overlaps with one or more existing Delivery Windows. If true, the method **700** proceeds to block **712** where the Delivery Window start time is advanced to the latest end time of the overlapped Delivery Windows and the method **700** then proceeds to repeat the operations at block **708.**

At block **714,** if the Schedule Window start time of any presentation instance falls within the schedule time and the Delivery Window end time, the NRP logic **202** sets the presentation instance to available.

At block **716,** a determination is made as to whether the calculated Delivery Window end time falls out of any Schedule Window of an available presentation instance. If so, the method proceeds to block **718** where the scheduling of $L_{OUT}$ for FD resources within network i fails. Otherwise, the schedule time is advanced to the Delivery Window end time.

At block **720,** a determination is made as to whether all the instances of presentation j are scheduled. If all have been scheduled, the method proceeds to block **722** where presentation j is removed from the presentation list L. At block **724,** a determination is made as to whether there are more presentations in list L. If there are no more presentations in list L, the FD scheduling for the FD resources succeeds at block **726.**

At block **728**, the NRP logic **202** sets the Schedule Window start time for the (k+1) instance of presentation j to FD_MIN_GAP plus the Delivery Window start time of the $k^{th}$ instance.

At block **730,** the NRP logic **202** makes a determination as to whether there are available presentation instances in the list L. If there are available presentation instances at the current schedule time, NRP logic repeats the operations at block **706**. Otherwise, NRP logic proceeds to block **704.**

Note that the schedule time of the NRP logic **202** and the system time in the resource definition are specified based on a one-week period template for the UTC time zone (GMT), with the start-of-the-week on Sunday 12:00AM as 0 second, and an end-of-the-week on Saturday 11:59:59PM as 604799 seconds. The NRP logic **202** operates to wrap around the time values at the end of the week using a modulo operation.

## Summary

The following summarizes the operations provided in aspects of the provisioning system.

### 1. Candidate Resource Creation
Create candidate Resource entities for carrying targeted Service content.

### 2. Resource planning
Determine the Transport network capacity for carrying the candidate Resources.

### 3. Resource to Service association
Assign the planned Resources to carry the targeted Service content in the transport networks.

### 4. Resource configuration distribution
Distribution the Resource configuration and its Service association to the TN component as well as receiving devices to facilitate traffic policing, content delivery, and reception.

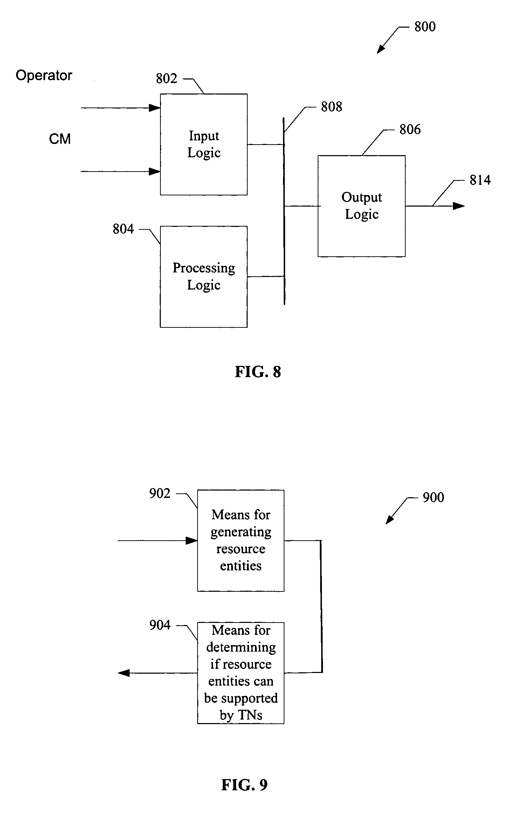

**FIG. 8** shows a diagram of NPR logic **800** for use in aspects of a provisioning system. For example, the NPR logic **800** is suitable for use as the NPR **202** shown in **FIG. 2.** In an aspect, the NPR logic **800** comprises input logic **802,** processing logic **804,** and output logic **806** all coupled to a data bus **808.**

The input logic **802** comprises at least one of a CPU, integrated circuit, processor, gate array, hardware logic, memory elements, and/or a combination of hardware and software. The input logic **802** is configured to receive input from an operator and a configuration manager (CM). For example, the input from the operator comprises any desired information about targeted services to be distributed over one or more TNs, which may include average data rate and standard deviation associated with selected service components. In an aspect, the input from the CM comprises any desired TN dependent and independent information as described above.

The processing logic **804** comprises at least one of a CPU, an integrated circuit, processor, gate array, hardware logic, memory elements, and/or hardware executing software. The processing logic **804** is configured to perform the modeling procedures and algorithms described above to provision and plan for targeted services to be distributed over one or more TNs. Once the provisioning and planning for the distribution of the targeted services is determined, the processing logic **804** operates to generate a service association that assigns the resource entities to carry the targeted services in the transport networks. The processing logic **804** then operates to distribute the resource configurations and the service associations to the TNs and/or one or more receiving devices. For example, the processing logic **804** controls the output logic 806 to output the resource configurations and the service associations.

The output logic **806** comprises at least one of a CPU, an integrated circuit, processor, gate array, hardware logic, memory elements, and/or a combination of hardware and software. The output logic **806** is configured to output a network provisioning result. In an aspect, the output logic **806** outputs a provisioning result that indicates whether provisioning was successful.

In an aspect, the provisioning system comprises one or more program instructions ("instructions") or sets of codes ("codes") embodied on a machine-readable medium, which when executed by a computer or at least one processor or an integrated circuit, for instance, a processor at the processing logic **804,** provides the functions described herein. For example, the codes may be loaded into the NRP logic **800** from a machine-readable medium, such as a floppy disk, CDROM, memory card, FLASH memory device, RAM, ROM, or any other type of memory device or machine-readable medium that interfaces to the NRP logic **800.** In another aspect, the codes may be downloaded into the NRP logic **800** from an external device or network resource. The codes, when executed by a processor, provide aspects of a provisioning system as described herein.

**FIG. 9** shows exemplary provisioning logic **900** for use in aspect of a provisioning system. In an aspect, the provisioning logic **900** is implemented by at least one processor or integrated circuit comprising one or more modules configured to provide aspects of a provisioning system as described herein. For example, each module comprises hardware, and/or hardware executing software to provide aspects of the provisioning system.

The provisioning logic **900** comprises a first module that comprises means **902** for means for generating one or more resource entities that represent resource requirements of one or more targeted services, respectively, wherein the resource entities are modeled from at least one of transport network dependent information and transport network independent information. For example, in an aspect, the means **902** comprises the processing logic **804.**

The provisioning logic **900** comprises a second module that comprises means **904** for means for determining whether the one or more resource entities can be supported by one or more transport networks. For example, in an aspect, the means **904** comprises the processing logic **804.**

The various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium is coupled to the processor, such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The description of the disclosed aspects is provided to enable any person skilled in the art to make or use the present invention. Various modifications to these aspects may be readily apparent to those skilled in the art, and the generic principles defined herein may be applied to other aspects, e.g., in an instant messaging service or any general wireless data communication applications, without departing from the spirit or scope of the invention. Thus, the present invention is not intended to be limited to the aspects shown herein but is to be accorded the widest scope consistent with the principles and novel features disclosed herein. The word "exemplary" is used exclusively herein to mean "serving as an example, instance, or illustration." Any aspect described herein as "exemplary" is not necessarily to be construed as preferred or advantageous over other aspects.

Accordingly, while aspects of a provisioning system have been illustrated and described herein, it will be appreciated that various changes can be made to the aspects without departing from their spirit or essential characteristics. Therefore, the disclosures and descriptions herein are intended to be illustrative, but not limiting, of the scope of the invention, which is set forth in the following claims.

**Claims**

1. A method for resource planning in a communication network, the method comprising:

   generating one or more resource entities that represent resource requirements of one or more targeted services, respectively, wherein the resource entities are modeled from at least one of transport network dependent information and transport network independent information; and
   determining whether the one or more resource entities can be supported by one or more transport networks.

2. The method of claim 1, wherein said generating comprises using a transport network protocol stack overhead to convert between application layer quality of service requirements associated with the one or more targeted services and usage requirements associated with the one or more transport networks.

3. The method of claim 1, wherein said generating comprises using a statistical model to estimate aggregated traffic characteristics of variable bit-rate traffic associated with a selected targeted service to generate an associated resource entity.

4. The method of claim 1, further comprising:

   assigning priorities to the one or more resource entities; and
   determining whether each resource entity can be supported by the one or more transport networks based on its respective priority.

5. The method of claim 1, further comprising determining an amount of resource associated with the one or more transport networks that can be used for non real-time traffic.

6. The method of claim 1, wherein said determining comprises scheduling at least a portion of the one or more resource entities based on a recurring template.

7. The method of claim 1, further comprising generating a service association that assigns the one or more resource entities to carry the one or more targeted services in the one or more transport networks.

8. The method of claim 7, further comprising distributing the one or more resource entities and the service association to at least one of the one or more transport networks and one or more receiving devices.

9. An apparatus for resource planning in a communication network, the apparatus comprising:

   input logic configured to receive at least one of transport network dependent information and transport network independent information; and
   processing logic configured to generate one or more resource entities that represent resource requirements of one or more targeted services, respectively, wherein the resource entities are modeled from at least one of the transport network dependent information and the transport network independent information; and wherein said processing logic is configured to determine whether the one or more resource entities can be supported by one or more transport networks.

10. The apparatus of claim 9, wherein said processing logic is configured to use a transport network protocol stack overhead to convert between application layer quality of service requirements associated with the one or more targeted services and usage requirements associated with the one or more transport networks.

11. The apparatus of claim 9, wherein said processing logic is configured to use a statistical model to estimate aggregated traffic characteristics of variable bit-rate traffic associated with a selected targeted service to generate an associated resource entity.

12. The apparatus of claim 9, wherein said processing logic is configured to:

assign priorities to the one or more resource entities; and
determine whether each resource entity can be supported by the one or more transport networks based on its respective priority.

13. The apparatus of claim 9, wherein said processing logic is configured to determine an amount of resource associated with the one or more transport networks that can be used for non real-time traffic.

14. The apparatus of claim 9, wherein said processing logic is configured to schedule at least a portion of the one or more resource entities based on a recurring template.

15. The apparatus of claim 9, wherein said processing logic is configured to generate a service association that assigns the one or more resource entities to carry the one or more targeted services in the one or more transport networks.

16. The apparatus of claim 15, said processing logic is configured to distribute the one or more resource entities and the service association to at least one of the one or more transport networks and one or more receiving devices.

17. An apparatus for resource planning in a communication network, the apparatus comprising:

means for generating one or more resource entities that represent resource requirements of one or more targeted services, respectively, wherein the resource entities are modeled from at least one of transport network dependent information and transport network independent information; and
means for determining whether the one or more resource entities can be supported by one or more transport networks.

18. The apparatus of claim 17, wherein said means for generating comprises means for using a transport network protocol stack overhead to convert between application layer quality of service requirements associated with the one or more targeted services and usage requirements associated with the one or more transport networks.

19. The apparatus of claim 17, wherein said means for generating comprises means for using a statistical model to estimate aggregated traffic characteristics of variable bit-rate traffic associated with a selected targeted service to generate an associated resource entity.

20. The apparatus of claim 17, further comprising:

means for assigning priorities to the one or more resource entities; and
means for determining whether each resource entity can be supported by the one or more transport networks based on its respective priority.

21. The apparatus of claim 17, further comprising means for determining an amount of resource associated with the one or more transport networks that can be used for non real-time traffic.

22. The apparatus of claim 17, wherein said means for determining comprises means for scheduling at least a portion of the one or more resource entities based on a recurring template.

23. The apparatus of claim 17, further comprising means for generating a service association that assigns the one or more resource entities to carry the one or more targeted services in the one or more transport networks.

24. The apparatus of claim 23, further comprising means for distributing the one or more resource entities and the service association to at least one of the one or more transport networks and one or more receiving devices.

25. A computer program product for resource planning in a communication network, comprising:

a machine-readable medium embodying:

a first set of codes for causing a computer to generate one or more resource entities that represent resource requirements of one or more targeted services, respectively, wherein the resource entities are modeled from at least one of transport network dependent information and transport network independent information; and

a second set of codes for causing the computer to determine whether the one or more resource entities can be supported by one or more transport networks.

26. The machine-readable medium of claim 25, wherein said first set of codes are configured to cause the computer to use a transport network protocol stack overhead to convert between application layer quality of service requirements associated with the one or more targeted services and usage requirements associated with the one or more transport networks.

27. The machine-readable medium of claim 25, wherein said first set of codes are configured to cause the computer to use a statistical model to estimate aggregated traffic characteristics of variable bit-rate traffic associated with a selected targeted service to generate an associated resource entity.

28. The machine-readable medium of claim 25, wherein said first set of codes are configured to cause the computer to:

assign priorities to the one or more resource entities; and
determine whether each resource entity can be supported by the one or more transport networks based on its respective priority.

29. The machine-readable medium of claim 25, wherein said first set of codes is configured to cause the computer to generate a service association that assigns the one or more resource entities to carry the one or more targeted services in the one or more transport networks.

30. The machine-readable medium of claim 29, wherein said first set of codes is configured to cause the computer to distribute the one or more resource entities and the service association to at least one of the one or more transport networks and one or more receiving devices.

31. At least one integrated circuit configured to provide resource planning in a communication network, the at least one integrated circuit comprising:

a first module for generating one or more resource entities that represent resource requirements of one or more targeted services, respectively, wherein the resource entities are modeled from at least one of transport network dependent information and transport network independent information; and
a second module for determining whether the one or more resource entities can be supported by one or more transport networks.

32. The at least one integrated circuit of claim 31, wherein said first module is configured to use a transport network protocol stack overhead to convert between application layer quality of service requirements associated with the one or more targeted services and usage requirements associated with the one or more transport networks.

33. The at least one integrated circuit of claim 31, wherein said first module is configured to:

assign priorities to the one or more resource entities; and
determine whether each resource entity can be supported by the one or more transport networks based on its respective priority.

34. The at least one integrated circuit of claim 31, wherein said first module is configured for generating a service association that assigns the one or more resource entities to carry the one or more targeted services in the one or more transport networks.

35. The at least one integrated circuit of claim 34, wherein said first module is configured for distributing the one or more resource entities and the service association to at least one of the one or more transport networks and one or more receiving devices.

| Service layer | Multimedia Service | | |
|---|---|---|---|
| Resource layer | Network abstraction | | |
| Network layer | TN1 | TN2 | TN3 |

— 100

**FIG. 1**

— 200

**FIG. 2**

— 300

Start

302 — $L_{OUT}$=empty
J=1

Add resource $L_{IN\_J}$ to
$L_{OUT}$ — 304

$L_{OUT}$ meets the schedulable
conditions in the multiplexes? — 306

J=J+1

NO

308 — Remove $L_{IN\_J}$
from $L_{OUT}$;

310 — Notify Operator

YES

312 — J < N?

YES

NO

End

**FIG. 3**

400

402

**Application Layer**

| Application layer packet 1 | | Application layer packet 2 | ... |

$B_j$ (b/s)

**Transport Layer**

| F H | Fragment 1 (121 bytes) | F H | Fragment 2 (121 bytes) | ... | F H | Fragment n | F H | Frag 1 | | F H | Fragment 2 (121 bytes) | ... |

Data Channel MAC Protocol Capsule

**Stream Layer**

| Stream 2 packet | Stream 1 packet | Stream 0 packet |

←Integer multiple of 122 Bytes→

| Stream 0 payload | Stream layer Trailer | MAC layer Trailer |

**MAC Layer**

| MAC Layer Packet | ... | MAC Layer Packet | MAC Layer Packet | ... | MAC Layer Packet | MAC Layer Packet | ... | MAC Layer Packet |

**Physical Layer**

$D_j$ (b/s)

| MAC Layer Packet 976 bits | FCS 16 Bits | Reserved 2 Bits | TAIL 6 Bits |

404

Physical Layer Packet (1000 Bits)

**FIG. 4**

**FIG. 5**

**FIG. 6**

**FIG. 7**

800

Operator

802

Input
Logic

CM

808

806

Output
Logic

814

804

Processing
Logic

**FIG. 8**

902

Means for
generating
resource
entities

900

904

Means for
determining
if resource
entities can
be supported
by TNs

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60947716 B